# EUROPEAN PATENT SPECIFICATION

(11) **EP 3 030 514 B1**
(45) Date of publication and mention of the grant of the patent: **11.08.2021**
(21) Application number: 14727099.5
(22) Date of filing: 14.03.2014
(51) Int. Cl.: B67D 1/00, B01F 3/04

(54) **EFFICIENTLY AND EASILY OPENING AND CLOSING A CANISTER VALVE**
EFFIZIENTE UND LEICHTE ÖFFNUNG UND SCHLIESSUNG EINES KANISTERVENTILS
OUVERTURE ET FERMETURE AISÉES ET EFFICACES D'UNE SOUPAPE DE BOUTEILLE

(30) Priority: 15.03.2013 US 201313792289; 13.03.2014 US 201414209856
(43) Date of publication of application: 15.06.2016
(73) Proprietor: The Coca-Cola Company, Atlanta, GA 30313 (US)
(72) Inventor: GREEN, C., Brad, One Coca-Cola Plaza, NW (US); BROWNE, Devon, One Coca-Cola Plaza, NW (US); LEHMAN, Joseph, One Coca-Cola Plaza, NW (US); BURCHFIELD, Brent, One Coca-Cola Plaza, NW (US)
(74) Representative: Dehns
(86) International application number: PCT/US2014/029465
(87) International publication number: WO 2014/144873

(56) References cited:
- EP-A1- 0 364 206
- EP-A1- 1 767 262
- WO-A2-2011/124702
- US-A- 4 960 261
- US-A- 5 947 334
- None

## Description

This application is being filed on 14 March 2014, as a PCT International patent application and claims priority to U.S. Provisional Patent Application Serial No. 61/792,889, filed on March 15, 2013, and U.S. Utility Patent Application Serial No. 14/209,856, filed March 13, 2014 .

### BACKGROUND

CO₂ gas may leak from a CO₂ canister when connecting the canister to an external system. This leakage reduces the amount of useful CO₂. The present disclosure addresses this issue and discloses a more convenient and simple connection mechanism.

Document WO-A-2011124702 discloses a system comprising: a canister comprising a canister fitment; a carbonation tank configured to receive gas from the canister; a canister connection apparatus comprising: a receiver fitment comprising a valve opening component configured to open a valve of the canister, the receiver fitment being configured to open a valve of the canister, the receiver fitment being configured to connect to the canister fitment, wherein the receiver fitment is further configured to seal and cover the canister fitment; and a controller in communication with the receiver fitment and the carbonation tank and configured to control the valve.

### STATEMENTS OF THE INVENTION

According to a first aspect of the invention, there is provided a system comprising: a canister comprising a canister fitment; a carbonation tank configured to receive gas from the canister; a canister connection apparatus comprising: a receiver fitment comprising a valve opening component configured to open a valve of the canister, the receiver fitment being configured to connect to the canister fitment, wherein the receiver fitment is further configured to seal and cover the canister fitment; the receiver fitment further comprising a carbonator throttle configured to restrict a flow of gas from the canister, after release by the valve opening component, to a reduced flow rate to prevent over pressurization of the carbonation tank; and the system further comprising a controller in communication with the receiver fitment and the carbonation tank and configured to control the carbonator throttle.

In a second aspect of the invention, there is provided a method of controlling over pressure within a system, the method comprising: providing a carbon dioxide system, the carbon dioxide system including a carbonation tank, a CO₂ canister, a carbonator throttle, and a quick connect mechanism, the quick connect mechanism including a lever and a solenoid that is in communication with a controller; actuating the carbonator throttle by energizing a solenoid via the controller; pulling the lever of the quick connect mechanism, the pulling of the lever being caused by the solenoid of the quick connect mechanism; pressing a release pin down into the CO2 canister, the release pin being pressed down by the lever of the quick connect mechanism to open a passageway; releasing a flow of gas from the CO2 canister through the passageway to the carbonator throttle; restricting the flow of gas through the carbonator throttle to prevent over pressure within the system; and leading the flow of gas to a top of the carbonation tank..

### BRIEF DESCRIPTION OF THE DRAWINGS

The accompanying drawings, which are incorporated in and constitute a part of this disclosure, illustrate various embodiments of the present invention. In the drawings:
FIG. 1 illustrates one embodiment of a canister connection apparatus,
FIG. 2 illustrates a cross-sectional view of the canister connection apparatus, FIG. 3 illustrates another cross-sectional view of the canister connection apparatus,
FIG. 4 illustrates a block diagram of a system including a canister connection apparatus,
FIGS. 5a - 5b illustrate three dimensional views of the canister connection apparatus,
FIGS. 6a - 6b illustrate a front view and a back view of the canister connection apparatus,
FIGS. 7a - 7b illustrate side views of the canister connection apparatus,
FIGS. 8a - 8b illustrate different views of a door of the canister connection apparatus,
FIGS. 9a - 9b illustrate three dimensional views of canister connection apparatus components, and
FIG. 10 illustrates a carbon dioxide system in accordance with the present disclosure.

### DETAILED DESCRIPTION

The following detailed description refers to the accompanying drawings. Wherever possible, the same reference numbers are used in the drawings and the following description to refer to the same or similar elements. While embodiments of the invention may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the invention. Instead, the proper scope of the invention is defined by the appended claims.

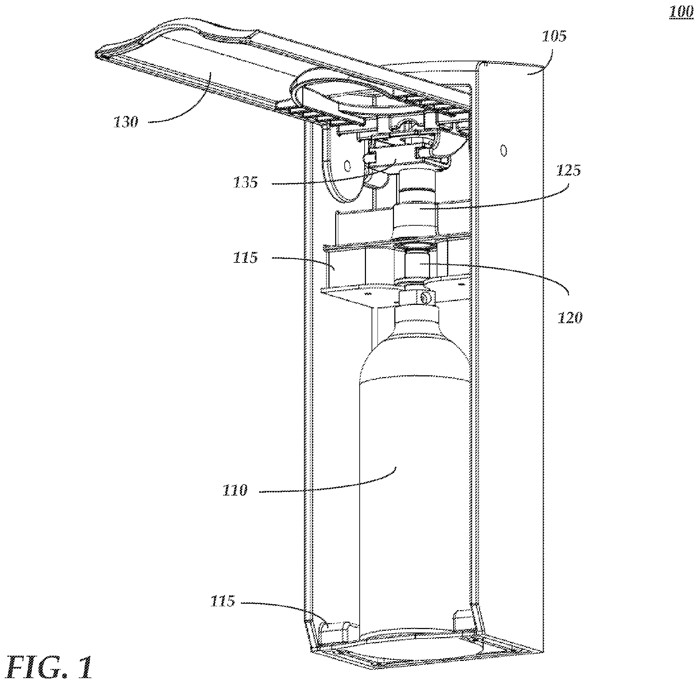

Embodiments of the invention may provide a canister connection apparatus designed to efficiently and easily connect a pressurized canister to an external system. FIG. 1 illustrates one embodiment of a canister connection apparatus 100. Apparatus 100 may receive a pressurized canister 110 in a housing 105. Housing 105 may be used to connect canister 110 to an external system. Canister 110 may be, but is not limited to, for example, a CO₂ canister.

The external system may be, but is not limited to, for example, a beverage dispensing system. Though FIG. 1 shows apparatus 100 to include a canister 110, a canister need not be included as part of apparatus 100. Rather, apparatus 100 may comprise a nest 115 designed to interface with various types of canisters having various volumes. Moreover, the term 'apparatus', as used herein, may include any combination of components or apparatuses.

Canister connection apparatus 100 may be designed to connect canister 110 to the external system efficiently and easily while mitigating the risk of gas leakage. Apparatus 100 may achieve this solution by sealing and covering a canister fitment apparatus 100 may comprise a movement mechanism 135 that may cause receiver fitment 125 to slide over canister fitment 120 as door 130 is lowered. In other embodiments, apparatus 100 may comprise a mechanism that inserts canister 110, along with canister fitment 120, into receiver fitment 125.

Generally stated, the lowering of door 130 may serve at least two purposes. First, it may cause receiver fitment 125 to connect with canister fitment 120 for opening a canister valve to enable gas flow. Second, it may serve to protect a handler of canister 110 from any leaks that may occur during the connection process by shielding the canister valve from the handler.

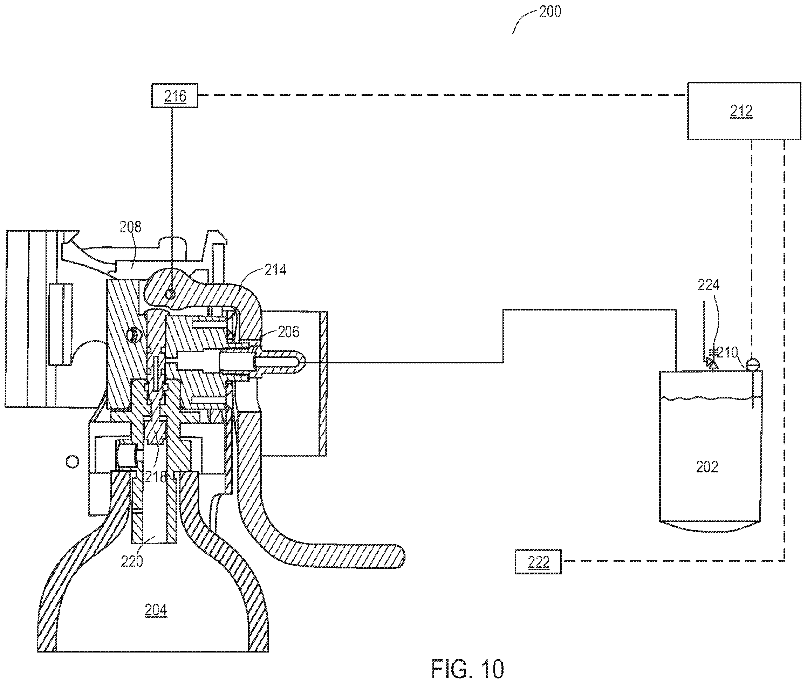

As receiver fitment 125 connects with canister fitment 120, a valve opening component of receiver fitment 125 may open the canister valve, thereby allowing gas to flow from canister 110 into apparatus 100 (i.e. charging the apparatus). The charged apparatus 100 may then be connected to (or, in various embodiments, may already be connected to) an external system via, for example, a port in housing 105 and feed the external system with the gas contained in canister 110. In some embodiments, the connection of the receiver fitment 125 with the canister fitment 120 may not in and of itself open the canister valve. Rather, as described in detail below with FIG. 10, a controller212 may actuate the valve opening component of receiver fitment 125 via a solenoid 216 or other electromechanical device at desired times based on feedback from one or more sensors (e.g. pressure sensor, door sensor, etc.).

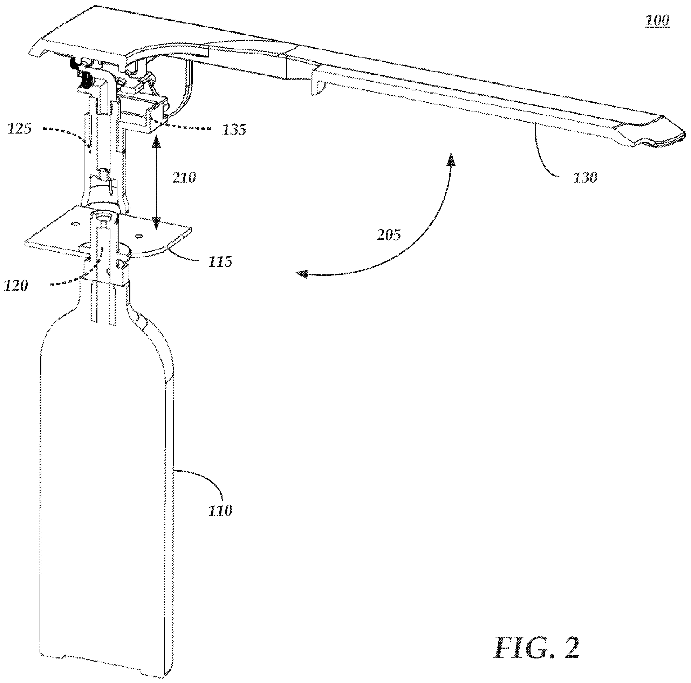

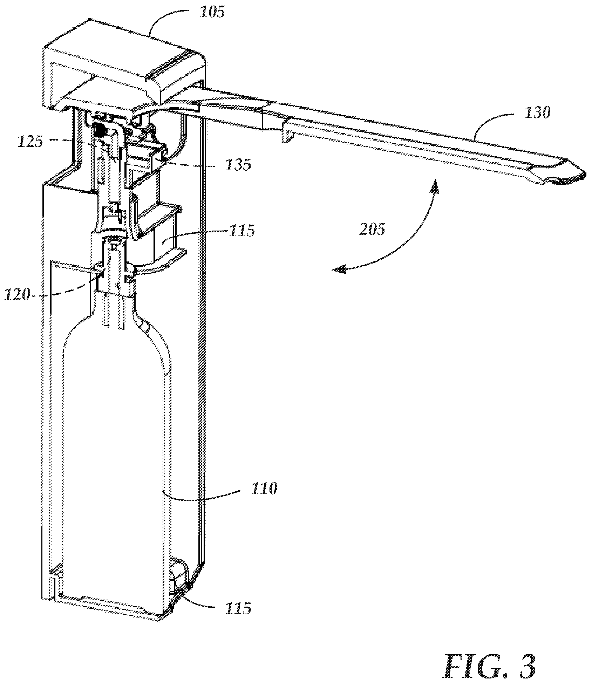

FIG. 2 illustrates a cross-sectional view of canister connection apparatus 100. A user of canister connection apparatus 100 may first insert canister 110 into canister housing 105. Though housing 105 is not show in FIG. 2, it is illustrated in FIG. 3. Canister housing 105 may be equipped with a canister nest 115 designed to secure canister 110 within canister housing 105. As mentioned above, nest 115 may be designed to receive and secure canisters of various types and sizes within canister housing 105. In various embodiments, the nest 115 may include a landing or other cutout designed to engage with a flange or other corresponding feature on the canister fitment 120 so as to secure the canister in the housing 105 and align the canister fitment 120 with the receiver fitment 125.

The user may then close door 130 of the apparatus 100 about an angle 205. As door 130 is closed, an over-center movement mechanism 135 causes receiver fitment 125 to slide about an axis 210 and cover canister fitment 120. For example, the over-center movement mechanism 135 may engage with a cam on the door 130. As the door 130 is moved, the over-center movement mechanism 135 may travel along the cam in such a way as to cause motion about axis 210. The axis 210 may be a vertical axis and/or may be parallel to an axis of a fluid flow pathway between the canister 110 and the receiver fitment 125. In various embodiments, a different sliding mechanism may be employed to cause canister 100 to be inserted into receiver fitment 125 as door 130 is closed. Additionally, receiver fitment 125 may be designed to clamp over canister fitment 120 once it is connected to canister fitment 120 so as to further secure canister 110. For example, a lower most portion of the receiver fitment 125 may be pushed onto the top surface of the flange on the canister fitment 120.

As receiver fitment 125 connects with canister fitment 120, an o-ring of canister fitment 120 seals the connection. In various embodiments of the invention, a valve opening component of receiver fitment 125 may force open a valve of canister 110 upon or after its connection to canister fitment 120. The opening of the valve may allow gas to flow from canister 110 to canister connection apparatus 100. In various embodiments, the o-ring of the canister fitment 120 seals the connection prior to the valve opening component of the receiver fitment 125 opening the valve of canister 110. In various embodiments, canister connection apparatus 100 may be designed so that the opening of canister valve occurs when or after door 130 has already been substantially closed.

The connection between receiver fitment 125 and canister fitment 120 effectively shield the user from accidental gas discharge in case of a defective o-ring or other anomaly. Moreover, since the canister valve may be opened only as door 130 is lowered, door 130 may also serve as shield protecting the user from accidental gas discharge.

As door 130 is opened about angle 205, receiver fitment 125 may be disconnected from canister fitment 120 in a similar way that it was connected to canister fitment 120 (e.g., about axis 210). In various other embodiments, canister fitment 120 may be disconnected from receiver fitment 125 in a similar way that it was connected to receiver fitment 125. The disconnection between receiver fitment 125 and canister fitment 120 may shut the canister valve, thereby stopping the gas flow. In this way, the user may be shielded from the potential gas discharge from disconnecting canister 110 from apparatus 100 in a similar way in which the user was shielded when connecting canister 110. In various embodiments, the o-ring of the canister fitment 120 seals the connection until after the valve opening component of the receiver fitment 125 disengages with the valve of canister 110 and allows the valve of the canister 110 to close.

Consistent with embodiments of the invention, canister connection apparatus 100 may comprise a locking mechanism. For example, door 130 may be latched to housing 105 when closed. The latch may comprise, but is not limited to, for example, an electrical solenoid. The opening of door 130 may be, for example, password protected. Any suitable locking mechanism may be used. In some embodiments, a closed door sensor 222 may be used to ensure that the door is closed and prevent the opening of the canister valve if the door is not closed. In some embodiments, the latch or locking mechanism may serve as a closed door sensor. As shown in FIG. 10, the controller 212 may prevent the solenoid 216 from being activated to open the canister valve until the closed door sensor 222 indicates that the door 130 is closed.

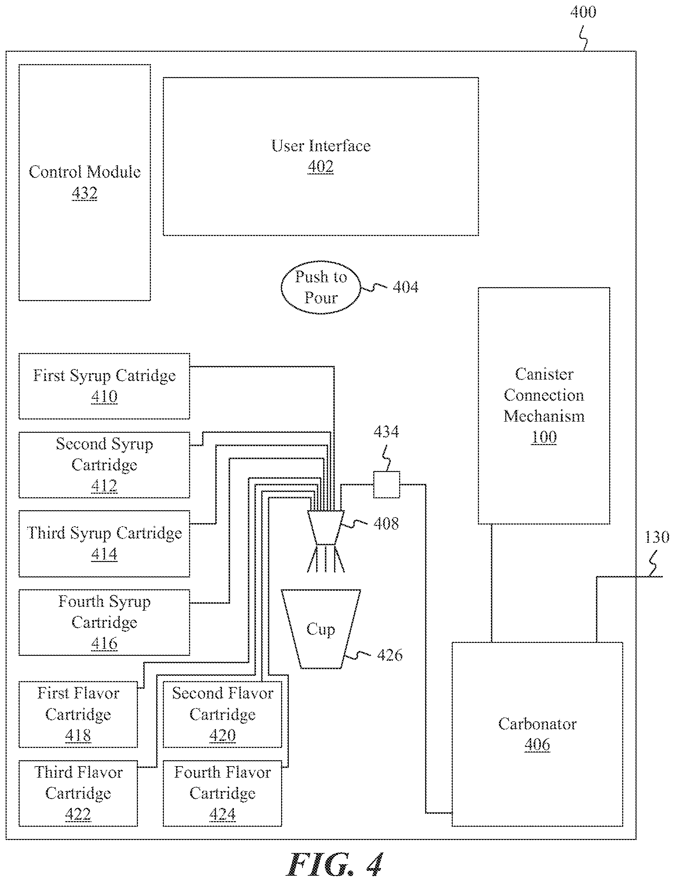

FIG. 4 illustrates a system comprising canister connection apparatus 100. The system may comprise a beverage dispenser 400 and includes a user interface 402, a push to pour button 404, a carbonator 406, and a nozzle 408. Syrups may be stored in a plurality of syrup cartridges (e.g., a first syrup cartridge 410, a second syrup cartridge 412, a third syrup cartridge 414, and a fourth syrup cartridge 416). Flavors may be stored in a plurality of flavor cartridges (e.g., a first flavor cartridge 118, a second flavor cartridge 420, a third flavor cartridge 422, a fourth flavor cartridge 424). The plurality of syrup cartridges and the plurality of flavor cartridges are connected to the nozzle 408.

During operation, a user may select a beverage using the user interface 402. When the user presses the push to pour button 404, carbonated water flows from the carbonator 406 to the nozzle 408 and the appropriate syrups and/or flavors flow from the plurality of syrup cartridges and/or the plurality of flavor cartridges. In a post mix beverage dispenser the, the syrups, flavors, and carbonated water mix about the nozzle 408. For example, if a user selects a cherry flavored cola, carbonated water will flow from the carbonator 406 to the nozzle 408. The cola syrup and cherry flavoring will flow from the appropriate cartridges to the nozzle 408. The ingredients will then flow through the nozzle 408 and may air mix within the exiting fluid stream and a cup 426.

The carbonated water is formed within the carbonator 406. To form the carbonated water, CO₂ flows from a carbon dioxide source (e.g., canister connection apparatus 100) to the carbonator 406. Still water may flow into the carbonator 406 from an external source 430. The cooperation of the beverage dispenser may be controlled by a control module 432. The control module 432 may also monitor a backpressure, via a pressure sensor 434, within the plumbing between the carbonator 406 and the nozzle 408.

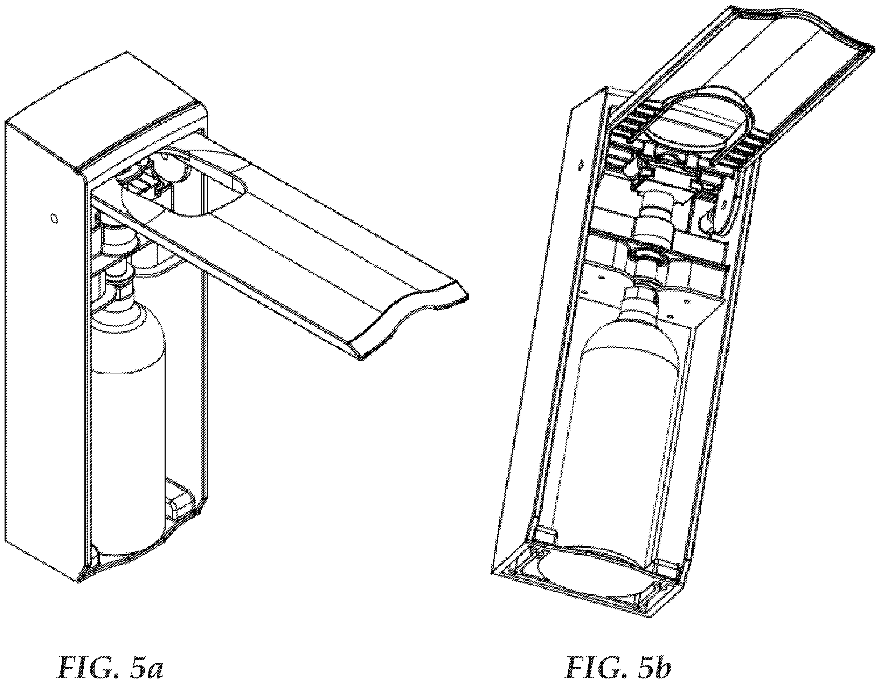

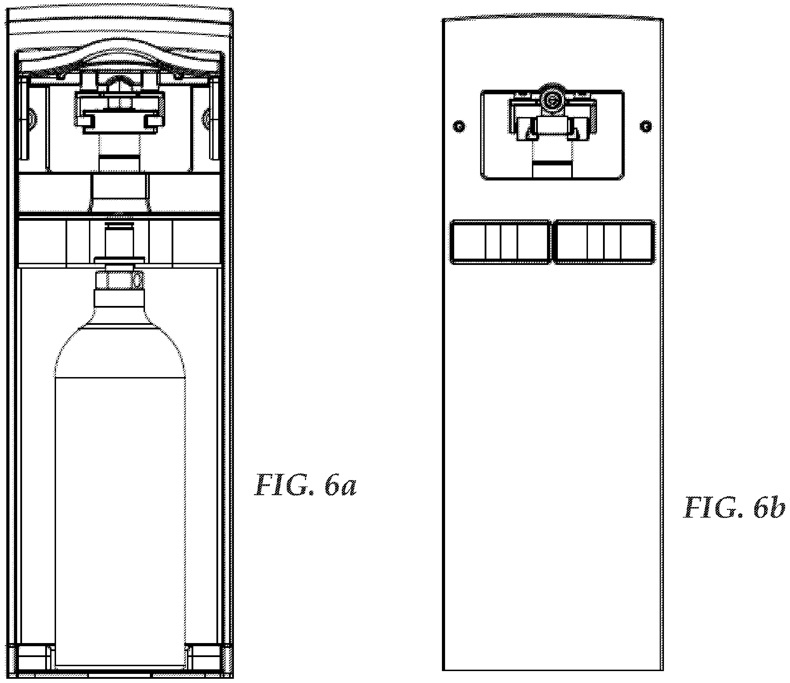

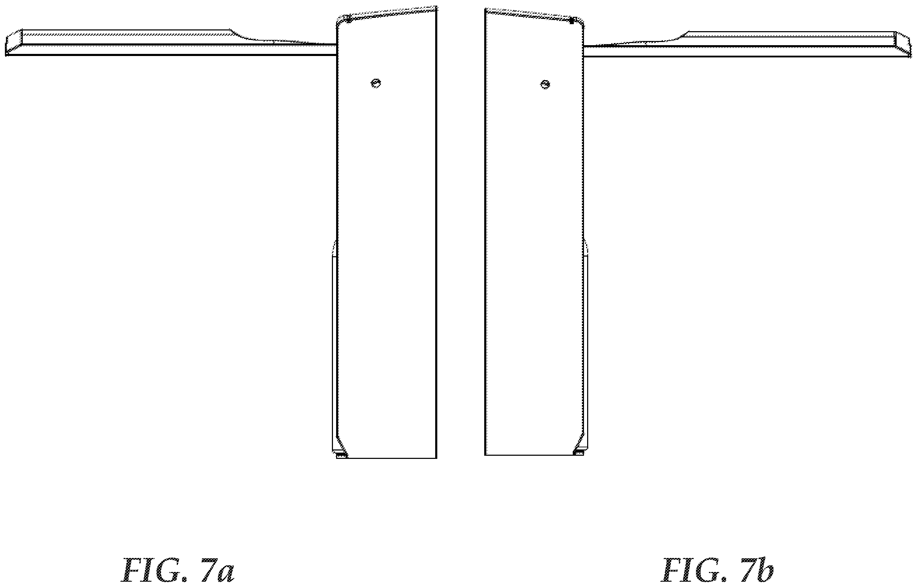

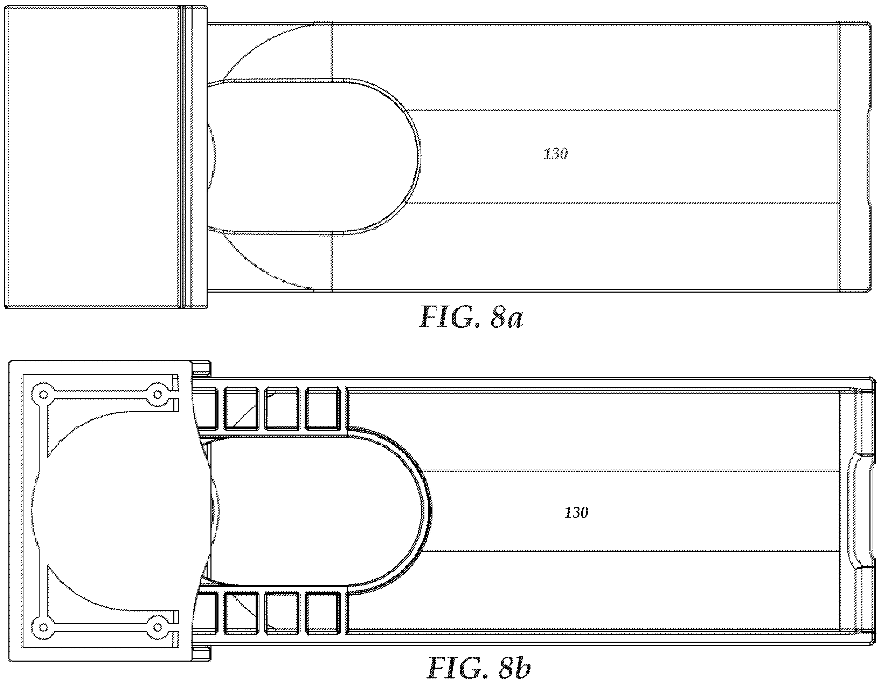

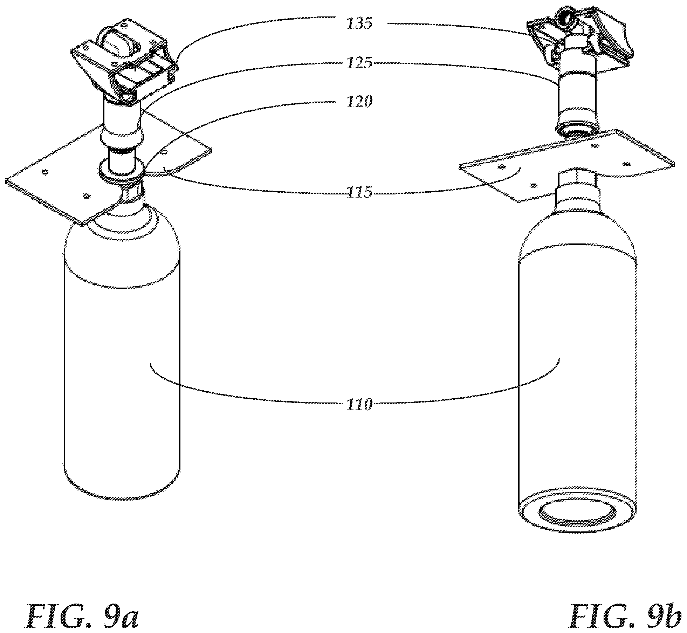

FIG. 5a is a first three dimensional view of canister connection apparatus 100. FIG. 5b is a second three dimensional view of canister connection apparatus 100. FIG. 6a is a front view of canister connection apparatus 100. FIG. 6b is a back view of canister connection apparatus 100. FIG. 7a is a first side view of canister connection apparatus 100. FIG. 7b is a second side view of canister connection apparatus 100. FIG. 8a is a front view door 130. FIG. 8b is a back view door 130. FIGS. 9a-9B are three dimensional view of canister 110, nest 115, canister fitment 120, receiver fitment 125, and movement mechanism 135.

FIG. 10 is a diagram of a carbon dioxide system 200. The carbon dioxide system 200 can include a carbonation tank 202, a CO₂ canister 204, a carbonator throttle 206 (e.g., sintered metal disc) and a quick connect mechanism 208. In some embodiments, the quick connect mechanism 208 may be embodied as described above. The carbonator throttle 206 may include a piston, a butterfly valve, or any other electromechanical obstructions known in the art for limiting a flow rate of a fluid through a passage. The carbon dioxide system 200 is constructed to prevent over pressure within the system. The carbonation tank 202 can include a pressure sensor 210 constructed to detect pressure within the carbonation tank 202. In one example, the pressure sensor 210 can be in communication with a controller 212.

The quick connect mechanism 208 can include a lever 214 and a solenoid 216. In the depicted example, the quick connect mechanism 208 is shown and described for a CO₂ canister with a vertical outlet. In one example, the quick connect mechanism 208 can be used for CO₂ canisters that have a right-angled outlet. In other examples, the quick connect mechanism 208 can be used for CO₂ canisters that otherwise have outlets that are not vertical.

In certain examples, the controller 212 can be in communication with the solenoid 216 to energize the solenoid 216. The controller 212 may communicate with the lever 214 via a solenoid 216 or any other electromechanical devices known in the art. The solenoid 216 can be configured to pull the lever 214 that presses a release pin 218 (e.g., schrader valve) down within the CO₂ canister 204 to open a passageway 220 to release gas that can flow through the carbonator throttle 206 and a fitting to feed line 222 which can lead to a top of the carbonation tank 202 to carbonate. In one example, the solenoid 216 can release gas from the CO₂ canister 204 through the line 222 each time the pressure falls below a set point predetermined by the user. In some embodiments, the controller 212 may prevent the solenoid 216 from being energized unless the closed door sensor 222 indicates that the door 130 is closed.

In certain examples, the carbonator throttle 206 can be constructed to restrict the flow rate of the gas coming out of the CO₂ canister 204 under high pressure to a reduced flow rate once the release pin 218 is pressed. The carbonator throttle 206 provides a very high restriction to the gas flow rate so the gas is released in a control way which can help prevent the carbonation tank 202 from being over pressurized. Therefore, the carbonator throttle 206 establishes a maximum throttle flow rate of CO₂ from the CO₂ canister 204 to the carbonation tank 202. In the carbon dioxide system 200, regulators can be eliminated because the carbonator throttle 206 allows the carbon dioxide system 200 to react slowly such that the carbonation tank 202 can adapt the new pressure of the gas in a controllable way. In one example, the carbonation tank 202 can include a pressure relief valve 224 that can relieve the pressure if the carbon dioxide system 200 supplies excess CO₂ to the carbonation tank 202. In some examples, the pressure relief valve 224 can act as a back up to help relieve the high pressure of gas in the event of a failure of the pressure sensor 210 or if the release pin 206 were to get stuck. The pressure relief valve 224 may enable CO₂ to be vented to the atmosphere once a predetermined pressure has accumulated within the carbonation tank 202. Upon the pressure within the carbonation tank 202 falling below a second predetermined pressure, the pressure relief valve may close. The pressure relief valve may be designed to enable venting gas (e.g. CO₂) from the carbonation tank 202 up to a maximum venting flow rate. In some embodiments, the maximum throttle flow rate is less than the maximum venting flow rate. Therefore, even if the release pin 218 is stuck open, the pressure relief valve 224 will be able to vent excess CO₂ to atmosphere faster than the CO₂ is being supplied to the carbonation tank 202. Accordingly, excess pressures will not build up within the carbonation tank 202.

## Claims

1. A system (200) comprising:
a canister (110; 204) comprising a canister fitment (120);
a carbonation tank (202) configured to receive gas from the canister;
a canister connection apparatus comprising:
a receiver fitment (125) comprising a valve opening component configured to open a valve (218) of the canister, the receiver fitment being configured to connect to the canister fitment, wherein the receiver fitment is further configured to seal and cover the canister fitment;
the receiver fitment further comprising a carbonator throttle (206) configured to restrict a flow of gas from the canister, after release by the valve opening component, to a reduced flow rate to prevent over pressurization of the carbonation tank; and
the system further comprising a controller (212) in communication with the receiver fitment and the carbonation tank and configured to control the carbonator throttle.

2. The system of claim 1, wherein the canister is a carbon dioxide source configured to deliver carbon dioxide gas to the carbonation tank.

3. The system of claim 1, wherein the carbonation tank comprises a pressure sensor (210) configured to detect pressure within the carbonation tank.

4. The system of claim 1, wherein the carbonation tank comprises a pressure relief valve (224) configured to exhaust the received gas upon command from the controller, wherein the pressure relief valve has a higher maximum flow rate than a maximum flow rate of the carbonator throttle.

5. The system of claim 1, wherein the carbonator throttle comprises one or more of:
a sintered metal disc;
a piston;
a butterfly valve; and/or
an electromechanical obstruction.

6. The system of claim 1, further comprising a door sensor (222) in communication with the controller.

7. The system of claim 6, wherein the controller restricts gas flow to the carbonation tank via the carbonator throttle until the door sensor indicates a door (130) housing the canister has been closed.

8. A method of controlling over pressure within a system, the method comprising:
providing a carbon dioxide system (200), the carbon dioxide system including a carbonation tank (202), a CO₂ canister (110; 204), a carbonator throttle (206), and a quick connect mechanism (208), the quick connect mechanism including a lever (214) and a solenoid (216) that is in communication with a controller (212);
actuating the carbonator throttle by energizing a solenoid via the controller (212);
pulling the lever of the quick connect mechanism, the pulling of the lever being caused by the solenoid (216) of the quick connect mechanism;
pressing a release pin (218) down into the CO₂ canister, the release pin being pressed down by the lever of the quick connect mechanism to open a passageway (220);
releasing a flow of gas from the CO₂ canister through the passageway to the carbonator throttle;
restricting the flow of gas through the carbonator throttle to prevent over pressure within the system; and
leading the flow of gas to a top of the carbonation tank.

9. The method of claim 8, further comprising providing a maximum throttle flow rate of CO₂ from the CO₂ canister to the carbonation tank.

10. The method of claim 8, wherein the carbonator throttle is a metal disc.

11. The method of claim 8, further comprising controlling the release of the flow of gas from the CO₂ canister each time pressure falls below a first predetermined set point.

12. The method of claim 8, wherein pulling the lever of the quick connect mechanism causes the release pin to be pressed simultaneously.

13. The method of claim 8, further comprising venting excess gas from the carbonation tank to the atmosphere by a pressure relief valve (224) positioned on the carbonation tank, wherein venting of the excess gas by the pressure relief valve occurs faster than the flow of gas being supplied to the carbonation tank.

14. The method of claim 13, wherein a pressure sensor (210) is in communication with the controller.

## Patentansprüche

1. System (200), umfassend:
einen Kanister (110; 204), der ein Kanisterzubehörteil (120) umfasst;
einen Karbonisierungstank (202), der ausgestaltet ist, um Gas von dem Kanister zu empfangen;
einen Kanisteranschlussapparat, umfassend:
ein Empfängerzubehörteil (125), das eine Ventilöffnungskomponente umfasst, die ausgestaltet ist, um ein Ventil (218) des Kanisters zu öffnen, wobei das Empfängerzubehörteil zur Verbindung mit dem Kanisterzubehörteil ausgestaltet ist, wobei das Empfängerzubehörteil des Weiteren ausgestaltet ist, um das Kanisterzubehörteil abzudichten und zu bedecken;
wobei das Empfängerzubehörteil des Weiteren eine Karbonisiererdrossel (206) umfasst, die ausgestaltet ist, um einen Gasfluss aus dem Kanister, nachdem die Freigabe durch die Ventilöffnungskomponente erfolgt ist, auf eine reduzierte Flussrate zu begrenzen, um zu starke Druckbeaufschlagung des Karbonisierungstanks zu verhindern; und
wobei das System des Weiteren eine Steuerung (212) in Kommunikation mit dem Empfängerzubehörteil und dem Karbonisierungstank umfasst und ausgestaltet ist, um die Karbonisiererdrossel zu steuern.

2. System nach Anspruch 1, wobei der Kanister eine Kohlendioxidquelle ist, die ausgestaltet ist, um Kohlendioxidgas an den Carbonisierungstank abzugeben.

3. System nach Anspruch 1, wobei der Carbonisierungstank einen Drucksensor (210) umfasst, der ausgestaltet ist, um den Druck innerhalb des Carbonisierungstanks zu detektieren.

4. System nach Anspruch 1, wobei der Carbonisierungstank ein Druckentlastungsventil (224) umfasst, das ausgestaltet ist, um das empfangene Gas auf Befehl von der Steuerung abzulassen, wobei das Druckentlastungsventil eine höhere maximale Flussrate als eine maximale Flussrate der Karbonisiererdrossel hat.

5. System nach Anspruch 1, wobei die Karbonisiererdrossel eine oder mehrere der Folgenden umfasst:
eine gesinterte Metallscheibe;
einen Kolben;
ein Absperrklappe; und/oder
ein elektromechanisches Hindernis.

6. System nach Anspruch 1, des Weiteren umfassend einen Türsensor (222) in Kommunikation mit der Steuerung.

7. System nach Anspruch 6, wobei die Steuerung den Gasfluss zu dem Karbonisierungstank über die Karbonisiererdrossel begrenzt, bis ein Türsensor angibt, dass eine Tür (130), die den Kanister einhaust, geschlossen worden ist.

8. Verfahren zum Steuern von Überdruck innerhalb eines Systems, wobei das Verfahren umfasst:
Bereitstellen eines Kohlendioxidsystems (200), wobei das Kohlendioxidsystem einen Karbonisierungstank (202), einen CO₂-Kanister (110; 204), eine Karbonisiererdrossel (206) und einen Schnellkupplungsmechanismus (208) einschließt, wobei der Schnellkupplungsmechanismus einen Hebel (214) und ein Solenoid (216) einschließt, das in Kommunikation mit einer Steuerung (212) ist;
Betätigen der Karbonisiererdrossel, indem ein Solenoid über die Steuerung (212) mit Energie versorgt wird;
Ziehen des Hebels des Schnellkupplungsmechanismus, wobei das Ziehen des Hebels durch das Solenoid (216) des Schnellkupplungsmechanismus bewirkt wird;
Drücken eines Freigabestifts (218) abwärts in den CO₂-Kanister, wobei der Freigabestift durch den Hebel des Schnellkupplungsmechanismus heruntergedrückt wird, um einen Durchgang (220) zu öffnen;
Freigeben eines Gasflusses aus dem CO₂-Kanister durch den Durchgang hindurch zu der Karbonisiererdrossel;
Begrenzen des Gasflusses durch die Karbonisiererdrossel hindurch, um Überdruck innerhalb des Systems zu verhindern; und
Führen des Gasflusses in einen oberen Bereich des Karbonisierungstanks.

9. Verfahren nach Anspruch 8, des Weiteren umfassend Bereitstellen einer maximalen Drosselflussrate von CO₂ aus dem CO₂-Kanister an den Karbonisierungstank.

10. Verfahren nach Anspruch 8, wobei die Karbonisiererdrossel eine Metallscheibe ist.

11. Verfahren nach Anspruch 8, des Weiteren umfassend Steuern der Freigabe des Gasflusses aus dem CO₂-Kanister bei jedem Mal, wenn der Druck unter einen ersten vorbestimmten Sollwert fällt.

12. Verfahren nach Anspruch 8, wobei Ziehen des Hebels des Schnellkupplungsmechanismus bewirkt, dass der Freigabestift gleichzeitig gedrückt wird.

13. Verfahren nach Anspruch 8, des Weiteren umfassend Entlüften von überschüssigem Gas aus dem Karbonisierungstank an die Atmosphäre durch ein Druckentlastungsventil (224), das auf dem Karbonisierungstank positioniert ist, wobei Entlüften des überschüssigen Gases durch das Druckentlastungsventil rascher stattfindet, als der Gasfluss dem Karbonisierungstank zugeführt wird.

14. Verfahren nach Anspruch 13, wobei ein Drucksensor (210) in Kommunikation mit der Steuerung ist.

## Revendications

1. Système (200) comprenant :
une cartouche (110 ; 204) comprenant un accessoire de cartouche (120) ;
une cuve de gazéification (202) configurée pour recevoir du gaz depuis la cartouche ;
un appareil de raccordement de cartouche comprenant :
un accessoire de réception (125) comprenant un composant d'ouverture de valve configuré pour ouvrir une valve (218) de la cartouche, l'accessoire de réception étant configuré pour se raccorder à l'accessoire de cartouche, l'accessoire de réception étant également configuré pour sceller et recouvrir l'accessoire de cartouche ;
l'accessoire de réception comprenant en outre un organe d'étranglement de gazéificateur (206) configuré pour limiter un écoulement de gaz depuis la cartouche, après libération par le composant d'ouverture de valve, à un débit réduit pour empêcher une mise en surpression de la cuve de gazéification ; et
le système comprenant en outre un dispositif de commande (212) en communication avec l'accessoire de réception et la cuve de gazéification et configuré pour commander l'organe d'étranglement de gazéificateur.

2. Système de la revendication 1, dans lequel la cartouche est une source de dioxyde de carbone configurée pour distribuer du dioxyde de carbone gazeux à la cuve de gazéification.

3. Système de la revendication 1, dans lequel la cuve de gazéification comprend un capteur de pression (210) configuré pour détecter la pression à l'intérieur de la cuve de gazéification.

4. Système de la revendication 1, dans lequel la cuve de gazéification comprend une soupape de décharge (224) configurée pour évacuer le gaz reçu lors d'une commande issue du dispositif de commande, la soupape de décharge ayant un débit maximal supérieur à un débit maximal de l'organe d'étranglement de gazéificateur.

5. Système de la revendication 1, dans lequel l'organe d'étranglement de gazéificateur comprend un ou plusieurs éléments parmi :
un disque métallique fritté ;
un piston ;
une vanne papillon ; et/ou
une obstruction électromécanique.

6. Système de la revendication 1, comprenant en outre un capteur de porte (222) en communication avec le dispositif de commande.

7. Système de la revendication 6, dans lequel le dispositif de commande limite l'écoulement de gaz jusqu'à la cuve de gazéification par le biais de l'organe d'étranglement de gazéificateur jusqu'à ce que le capteur de porte indique qu'une porte (130) abritant la cartouche a été fermée.

8. Procédé de contrôle d'une surpression à l'intérieur d'un système, le procédé comprenant :
l'obtention d'un système de dioxyde de carbone (200), le système de dioxyde de carbone comportant une cuve de gazéification (202), une cartouche de CO₂ (110 ; 204), un organe d'étranglement de gazéificateur (206), et un mécanisme de raccord rapide (208), le mécanisme de raccord rapide comportant un levier (214) et un solénoïde (216) qui est en communication avec un dispositif de commande (212) ;
l'actionnement de l'organe d'étranglement de gazéificateur par alimentation d'un solénoïde par le biais du dispositif de commande (212) ;
le tirage du levier du mécanisme de raccord rapide, le tirage du levier étant provoqué par le solénoïde (216) du mécanisme de raccord rapide ;
une poussée sur une goupille de libération (218) à l'intérieur de la cartouche de CO₂, la goupille de libération étant poussée par le levier du mécanisme de raccord rapide pour ouvrir un passage (220) ;
la libération d'un écoulement de gaz depuis la cartouche de CO₂ à travers le passage jusqu'à l'organe d'étranglement de gazéificateur ;
la limitation de l'écoulement de gaz à travers l'organe d'étranglement de gazéificateur pour empêcher une surpression à l'intérieur du système ; et
l'acheminement de l'écoulement de gaz jusqu'à un sommet de la cuve de gazéification.

9. Procédé de la revendication 8, comprenant en outre la fourniture d'un débit d'organe d'étranglement maximal de CO₂ de la cartouche de CO₂ à la cuve de gazéification.

10. Procédé de la revendication 8, dans lequel l'organe d'étranglement de gazéificateur est un disque métallique.

11. Procédé de la revendication 8, comprenant en outre le contrôle de la libération de l'écoulement de gaz depuis la cartouche de CO₂ chaque fois que la pression chute en dessous d'une première consigne prédéterminée.

12. Procédé de la revendication 8, dans lequel le tirage du levier du mécanisme de raccord rapide provoque une poussée simultanée sur la goupille de libération.

13. Procédé de la revendication 8, comprenant en outre l'évacuation de gaz en excès depuis la cuve de gazéification dans l'atmosphère par une soupape de décharge (224) positionnée sur la cuve de gazéification, l'évacuation du gaz en excès par la soupape de décharge se produisant plus rapidement que l'écoulement de gaz fourni à la cuve de gazéification.

14. Procédé de la revendication 13, dans lequel un capteur de pression (210) est en communication avec le dispositif de commande.
